# EUROPÄISCHE PATENTSCHRIFT

(11) **EP 3 532 765 B1**
(45) Veröffentlichungstag und Bekanntmachung des Hinweises auf die Patenterteilung: **23.12.2020**
(21) Anmeldenummer: 17777208.4
(22) Anmeldetag: 21.09.2017
(51) Int. Cl.: F16M 13/02, B60R 11/00, G06F 1/16

(54) **VORRICHTUNG ZUR MONTAGE AUF EINER ANORDNUNG**
DEVICE FOR MOUNTING ON AN ASSEMBLY
DISPOSITIF DE MONTAGE SUR UN ENSEMBLE

(30) Priorität: 28.10.2016 DE 102016221324
(43) Veröffentlichungstag der Anmeldung: 04.09.2019
(73) Patentinhaber: Robert Bosch GmbH, 70442 Stuttgart (DE)
(72) Erfinder: REISS, Juergen, 71638 Ludwigsburg (DE); LINDNER, Markus, 70180 Stuttgart (DE); MIULESCU, Costin, 74360 Ilsfeld (DE)
(86) Internationale Anmeldenummer: PCT/EP2017/073861
(87) Internationale Veröffentlichungsnummer: WO 2018/077544

(56) Entgegenhaltungen:
- WO-A1-2010/114370
- WO-A1-2012/163411
- DE-U1-202008 003 918
- US-A1- 2008 099 521
- US-A1- 2015 360 618
- US-A1- 2016 119 514

## Beschreibung

### Stand der Technik

Die Erfindung betrifft eine Vorrichtung zur Montage auf einer Anordnung.

Aus der DE 10 2014 215 843 A1 ist ein Fahrerbeobachtungssystem für ein Kraftfahrzeug bekannt, mit wenigstens einer Kamera, die an einem Kombiinstrument zur Fahrerbeobachtung angeordnet/anordenbar ist, und mit einer Recheneinheit zum Auswerten eines Ausgangssignals der Kamera.

Aus der US 2015/0360618 A1 ist ein Displayelement bekannt, das auf einer Sonnenblende eines Fahrzeugs montiert werden kann.

### Offenbarung der Erfindung

Die Erfindung umfasst eine Vorrichtung, aufweisend ein Steuerungsmodul und ein Kamera-Modul, wobei die Vorrichtung auf einer Anordnung, beispielsweise auf einer Anzeigeeinheit, montierbar ist und wobei das Steuerungsmodul und das Kamera-Modul mechanisch miteinander verbunden sind. Die Vorrichtung weist mindestens ein Befestigungsmittel zur Befestigung der Vorrichtung an der Anordnung auf. An der Vorrichtung ist mindestens ein Spannelement angeordnet, wobei das Spannelement so an der Vorrichtung angeordnet ist, dass die Anordnung zwischen dem Kamera-Modul und dem Steuerungsmodul einklemmbar ist. Mittels der vorliegenden Erfindung kann gewährleistet werden, dass der Verbund aus dem Steuerungsmodul, beispielsweise einer ECU, und dem Kamera-Modul sicher an einer Anordnung montiert werden kann. Hierdurch kann die Vorrichtung vorteilhafterweise so auf der Anordnung montiert werden, dass die Vorrichtung nicht auf der Anordnung verrutscht, beispielsweise aufgrund externer Einflüsse, wie Stöße und/oder Vibrationen.

Das Befestigungsmittel hat den Vorteil, dass die Vorrichtung an mindestens einer Stelle fest bzw. fix mit der Anordnung verbunden wird, wodurch die Vorrichtung rutschfest an der Anordnung angeordnet werden kann. Hierdurch wird die Vorrichtung an der vordefinierten Stelle auf der Anordnung fixiert. Die Verwendung mindestens eines Spannelements hat den Vorteil, dass Vibrationen und/oder Stöße, beispielsweise durch externe Einflüsse, kompensiert werden können.

Weiterhin kann durch das Spannelement gewährleistet werden, dass die Vorrichtung auf unterschiedlichen Anordnungen, welche beispielsweise unterschiedliche Dicken aufweisen, montiert werden kann. Hierdurch ergibt sich ein größeres Toleranzfeld hinsichtlich der Montage der Vorrichtung auf verschiedenen Anordnungen, beispielsweise einer Anzeigeeinheit und/oder einem Kombiinstrument.

Die Vorrichtung, aufweisend ein Steuerungsmodul und ein Kamera-Modul, gewährleistet weiterhin einen leichten und schnellen Montage-und Demontageprozess. Weiterhin kann das Steuerungsmodul und das Kamera-Modul mittels kostengünstiger Elemente auf einer Anordnung montiert werden. Dies ermöglicht eine Reduktion von Kosten und Aufwand.

In einer Ausgestaltung gemäß Anspruch 1 weist das mindestens eine Spannelement ein erstes Ende sowie ein, dem ersten Ende gegenüberliegendes, zweites Ende auf, wobei das erste Ende des Spannelements an dem Steuerungsmodul anordenbar ist und das zweite Ende des Spannelements an dem Kamera-Modul anordenbar ist. Hierdurch kann eine sichere Montage der Vorrichtung an der Anordnung gewährleistet werden, wobei externe Einflüsse wie Stöße und/oder Vibrationen kompensiert werden können, sodass die Vorrichtung nicht auf der Anordnung verrutscht.

Weiterhin ist das erste Ende des Spannelements an dem Steuerungsmodul einrastbar und/oder das zweite Ende des Spannelements an dem Kamera-Modul einrastbar. Der Vorteil besteht darin, dass durch das Spannelement die Vorrichtung sicher auf der Anordnung montiert werden kann, wobei vorteilhafterweise das Spannelement nicht auf der Vorrichtung verrutschen kann. Die Anordnung kann sicher zwischen dem Steuerungsmodul und dem Kamera-Modul eingeklemmt werden.

Gemäß Anspruch 1 weist die Vorrichtung eine Erhebung auf, wobei das erste und/oder das zweite Ende des Spannelements eine Öffnung aufweist. Die Öffnung des ersten und/oder des zweiten Endes des Spannelements ist auf der Erhebung der Vorrichtung an der Vorrichtung einrastbar. Die Verbindung des ersten und/oder des zweiten Ende des Spannelements mit der Vorrichtung ist vorteilhafterweise eine Schnappverbindung, wobei mittels der Schnappverbindung eine leichte und schnelle Montage und/oder Demontage gewährleistet werden kann. Ferner kann durch die Verwendung von kostengünstigen Elementen Aufwand und Kosten eingespart werden.

Ferner wirkt mittels des Spannelements eine Kraft auf die Vorrichtung, insbesondere auf das Steuerungsmodul und auf das Kamera-Modul, sodass die Anordnung zwischen dem Kamera-Modul und dem Steuerungsmodul einklemmbar ist. Hierdurch kann gewährleistet werden, dass die Vorrichtung, aufweisend das Steuerungsmodul und das Kamera-Modul, sicher und rutschfest auf der Anordnung montiert werden kann.

In einer vorteilhaften Ausgestaltung ist das mindestens eine Befestigungsmittel ein mechanisches Befestigungsmittel, zur mechanischen Befestigung der Vorrichtung an der Anordnung, insbesondere eine Schraube, eine Niete und/oder eine Klebeverbindung. Hierdurch kann die Vorrichtung vorteilhafterweise fix an der Anordnung montiert werden. Die mechanische Befestigung verhindert, dass die Vorrichtung auf der Anordnung verrutscht. Hierdurch können beispielsweise auch externe Einflüsse beispielsweise Stöße und/oder Vibrationen kompensiert werden.

In einer Ausführungsform weist das Steuerungsmodul und/oder das Kamera-Modul eine, durch die Anordnung kontaktierbare Fläche auf, wobei an der, durch die Anordnung kontaktierbaren Fläche des Steuerungsmoduls und/oder des Kamera-Moduls ein Schutzelement aus einem elastischen Material angeordnet ist, insbesondere Schaumstoff, zum Schutz der Anordnung. Hierdurch kann gewährleistet werden, dass die Anordnung nicht beschädigt wird, beispielsweise durch Verkratzen bei der Montage und/oder während des Gebrauchs, beispielsweise durch mechanische Einflüsse, wie zum Beispiel Stöße und/oder Vibrationen. Ferner können Geräusche, welche beispielsweise aufgrund externer Einflüsse, zum Beispiel aufgrund von Vibrationen entstehen, reduziert werden. Ist die Anordnung eine Anzeigeeinheit, insbesondere ein Display, wie beispielsweise ein LCD, kann durch die Verwendung eines Schutzelements aus einem elastischen Material eine Beschädigung des Displays und/oder Mura-Effekte, beispielsweise Verfärbungen des Displays, reduziert bzw. vermieden werden.

In einer vorteilhaften Ausgestaltung sind das Steuerungsmodul und das Kamera-Modul elektrisch miteinander verbunden. Hierdurch können Informationen vorteilhafterweise von dem Kamera-Modul an das Steuerungsmodul oder umgekehrt weitergegeben werden. Beispielsweise können Daten, vorzugsweise Bilddaten, welche von dem Kamera-Modul aufgenommen wurden, an das Steuerungsmodul zur Bearbeitung weitergegeben werden.

Vorteilhafterweise ist die elektrische Verbindung des Steuerungsmoduls mit dem Kamera-Modul eine flexible Folie, eine flexible Leiterplatte, eine starre Leiterplatte und/oder eine Stecker-Verbindung. Durch die Verwendung einer flexiblen Folie, beispielsweise eine Flex Folie, kann die elektrische Verbindung flexibel ausgestaltet werden, wobei sich die flexible Folie an Vorrichtung anlegen, bzw. anschmiegen kann. Hierdurch kann Bauraum eingespart werden.

In einer Weiterentwicklung ist die elektrische Verbindung des Steuerungsmoduls mit dem Kamera-Modul mittels einer Abschirmung abgeschirmt, insbesondere zur elektromagnetischen Abschirmung. Der Vorteil besteht darin, dass die elektrische Verbindung nicht durch externe Einflüsse, wie beispielsweise durch Strahlung, zum Beispiel elektromagnetische Strahlung, gestört wird. Hierdurch kann eine sichere Übertragung von Daten zwischen dem Kamera-Modul und dem Steuerungsmodul gewährleistet werden.

In einer Ausgestaltungsform weist die Vorrichtung eine Drehachse auf, wobei die Drehachse so an der Vorrichtung angeordnet ist, dass das Steuerungsmodul und das Kamera-Modul gegeneinander verdrehbar sind. Der Vorteil der Drehachse liegt in der einfachen, leichten und schnellen Montage der Vorrichtung auf der Anordnung bzw. in der einfachen, leichten und schnellen Demontage des Systems.

Ferner weist die Anordnung eine erste Seite sowie eine, der ersten Seite gegenüberliegende, zweite Seite auf. Das Steuerungsmodul ist auf der ersten Seite der Anordnung und das Kamera-Modul auf der zweiten Seite der Anordnung anordenbar. In einer Weiterentwicklung steht das Steuerungsmodul in Kontakt mit der ersten Seite der Anordnung sowie das Kamera-Modul in Kontakt mit der zweiten Seite der Anordnung. Es kann gewährleistet werden, dass die Anordnung sicher zwischen dem Steuerungsmodul und dem Kamera-Modul einklemmbar ist. Vorteilhafterweise kann die Vorrichtung sicher auf der Anordnung angeordnet und/oder eingeklemmt werden.

Die Erfindung umfasst ferner ein Verfahren zum Montieren einer Vorrichtung auf einer Anordnung, insbesondere auf einer Anzeigeeinheit, wobei die Vorrichtung ein Steuerungsmodul und ein Kamera-Modul aufweist. Das Steuerungsmodul und das Kamera-Modul sind mechanisch miteinander verbunden. In einem ersten Schritt wird die Anordnung zumindest teilweise zwischen dem Kamera-Modul und dem Steuerungsmodul angeordnet. In einem zweiten Schritt wird die Vorrichtung, insbesondere das Kamera-Modul oder das Steuerungsmodul, mittels eines Befestigungsmittels mit der Anordnung verbunden. In einem dritten Schritt werden das Kamera-Modul und das Steuerungsmodul in Kontakt mit der Anordnung gebracht. In einem vierten Schritt wird ein Spannelement an der Vorrichtung so angeordnet, dass die Anordnung zwischen dem Steuerungsmodul und dem Kamera-Modul eingeklemmt wird. Der Vorteil besteht darin, dass der Verbund aus dem Steuerungsmodul und dem Kamera-Modul sicher an einer Anordnung montiert werden kann. Die Vorrichtung kann vorteilhafterweise so auf der Anordnung montiert werden, dass die Vorrichtung nicht auf der Anordnung verrutscht, beispielsweise aufgrund externer Einflüsse, wie Stöße und/oder Vibrationen.

### Kurze Beschreibung der Zeichnungen

Ausführungsbeispiele der Erfindung sind in den Zeichnungen dargestellt und in den nachfolgenden Beschreibungen näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:
Fig. 1 eine schematische Darstellung einer Draufsicht eines Fahrzeugs mit einer Vorrichtung und Anordnung gemäß eines Ausführungsbeispiels der vorliegenden Erfindung;
Fig. 2 eine schematische Darstellung einer Vorrichtung auf einer Anordnung gemäß eines Ausführungsbeispiels der vorliegenden Erfindung;
Fig. 3 eine schematische Darstellung einer Vorrichtung auf einer Anordnung gemäß eines Ausführungsbeispiels der vorliegenden Erfindung;
Fig. 4 eine schematische Darstellung einer Vorrichtung gemäß eines Ausführungsbeispiels der vorliegenden Erfindung;
Fig. 5 eine schematische Darstellung einer Vorrichtung gemäß eines Ausführungsbeispiels der vorliegenden Erfindung;
Fig. 6 eine schematische Darstellung einer Vorrichtung von der Seite gemäß eines Ausführungsbeispiels der vorliegenden Erfindung;
Fig. 7 eine schematische Detaildarstellung einer Vorrichtung gemäß eines Ausführungsbeispiels der vorliegenden Erfindung;
Fig. 8 eine schematische Detaildarstellung einer Vorrichtung gemäß eines Ausführungsbeispiels der vorliegenden Erfindung;
Fig. 9 eine schematische Darstellung einer Vorrichtung gemäß eines Ausführungsbeispiels der vorliegenden Erfindung;
Fig. 10 schematische Darstellungen einer Vorrichtung auf einer Anordnung gemäß eines Ausführungsbeispiels der vorliegenden Erfindung;

### Ausführungsformen der Erfindung:

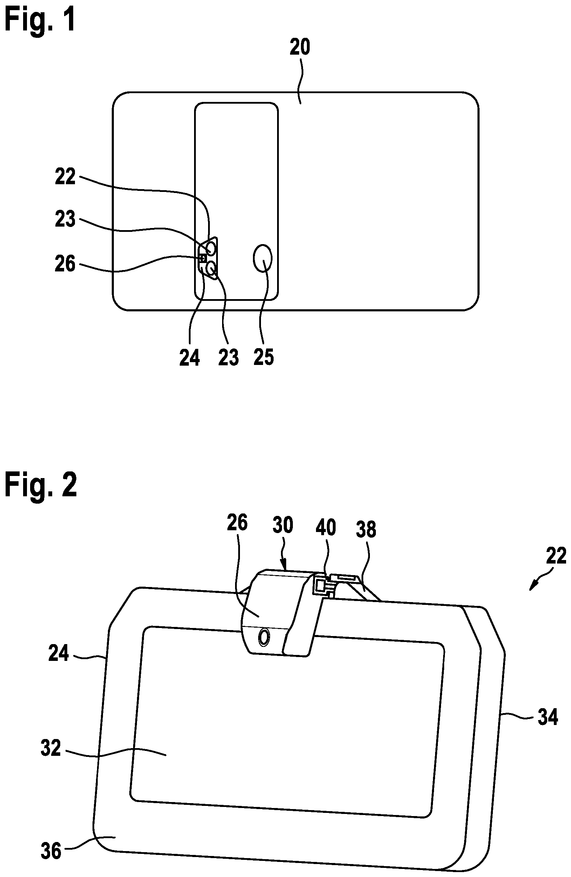

Fig. 1 zeigt eine Ausgestaltungsform einer schematischen Darstellung einer Draufsicht eines Fahrzeugs 20, beispielsweise eines Autos, mit einem System 22 zur Anzeige von Informationen 23, beispielsweise einem Anzeigesystem 22. Das Anzeigesystem 22 umfasst eine Anordnung 24, beispielsweise eine Anzeigeeinheit oder ein Kombiinstrument, sowie ein Steuerungsmodul und ein Kamera-Modul 26 und ist derart in dem Fahrzeug 20 angeordnet, dass ein Betrachter 25, zum Beispiel ein Fahrer eines Fahrzeugs 20, das Anzeigesystem 22 betrachten kann. Das Anzeigesystem 22 kann mittels einer Anzeigeeinheit 24 Informationen 23 auf einem Display an den Betrachter 25 ausgeben. Diese ausgegebenen Informationen 23 können beispielsweise Informationen über den Fahrzeugzustand, wie die Geschwindigkeit, die Drehzahlanzeige und/oder die Tankfüllung, und/oder Informationen zu Navigationshinweisen und/oder des Entertainment Systems sein. Alternativ kann das Anzeigesystem 22 auch in der Mittelkonsole des Fahrzeugs 20 eingebaut werden. Das Kamera-Modul 26 ist vorzugsweise aus Sicht des Betrachters 25 mittig am oberen Ende der Anzeigeeinheit 24 insbesondere an der Anzeigeeinheit 24 angeordnet.

Fig. 2 zeigt ein Anzeigesystem 22 mit einer Anordnung 24 sowie einer Vorrichtung 30. Das Anzeigesystem 22 ist hier zumindest teilweise von der Vorderseite gezeigt, wobei ein Betrachter, beispielsweise ein Fahrer eines Fahrzeugs, die Vorderseite des Anzeigesystems 22 betrachten kann. Die Anordnung 24, beispielsweise eine Anzeigeeinheit oder ein Kombiinstrument, ist vorzugsweise rechteckig ausgebildet und weist an der Vorderseite beispielsweise ein Display 32 auf zur Anzeige von Informationen für einen, auf die Anordnung 24 schauenden Betrachter. Ferner weist die Anordnung 24 eine erste Seite 34 sowie eine, der ersten Seite 34 gegenüberliegende, zweite Seite 36 auf, wobei die zweite Seite 36 der Anordnung 24 für einen, auf die Anordnung 24 schauenden Betrachter sichtbar ist. Die erste Seite 34 der Anordnung 24 ist vorzugsweise die Hinterseite der Anordnung 24 und die zweite Seite 36 der Anordnung 24 ist vorzugsweise die Vorderseite der Anordnung 24.

Die Vorrichtung 30 weist ein Kamera-Modul 26 sowie ein Steuerungsmodul 38 auf und ist zumindest teilweise auf der Anordnung 24 angeordnet. Das Steuerungsmodul 38 und das Kamera-Modul 26 sind ferner mechanisch miteinander verbunden. Mit anderen Worten ist die Anordnung 24 zumindest teilweise zwischen dem Steuerungsmodul 38 und dem Kamera-Modul 26 angeordnet bzw. eingeklemmt. In dieser Ausgestaltungsform ist das Steuerungsmodul 38 auf der ersten Seite 34 der Anordnung 24 sowie das Kamera-Modul 26 auf der zweiten Seite 36 der Anordnung 24 angeordnet. Vorzugsweise steht das Steuerungsmodul 38 in Kontakt mit der ersten Seite 34 der Anordnung 24 sowie das Kamera-Modul 26 in Kontakt mit der zweiten Seite 36 der Anordnung 24. Die Vorrichtung 30, insbesondere das Kamera-Modul 26, ist aus Sicht des Betrachters am oberen Rand der Anordnung 24 mittig angeordnet. Das Kamera-Modul 26 verdeckt zumindest teilweise die zweite Seite 36 der Anordnung 24.

An der Vorrichtung 30 ist ein Spannelement 40 angeordnet, wobei mittels des Spannelements 40 die Anordnung 24 zwischen dem Steuerungsmodul 38 und dem Kamera-Modul 26 eingeklemmt ist. Hierfür ist das Spannelement 40 vorzugsweise an dem Kamera-Modul 26 und/oder an dem Steuerungsmodul 38 einrastbar bzw. eingerastet. Das ist Spannelement 40 vorzugsweise aus Stahl, beispielsweise aus Federstahl, zum Beispiel X10CrNi18-8, 61SiCr7 und/oder aus Kunststoff.

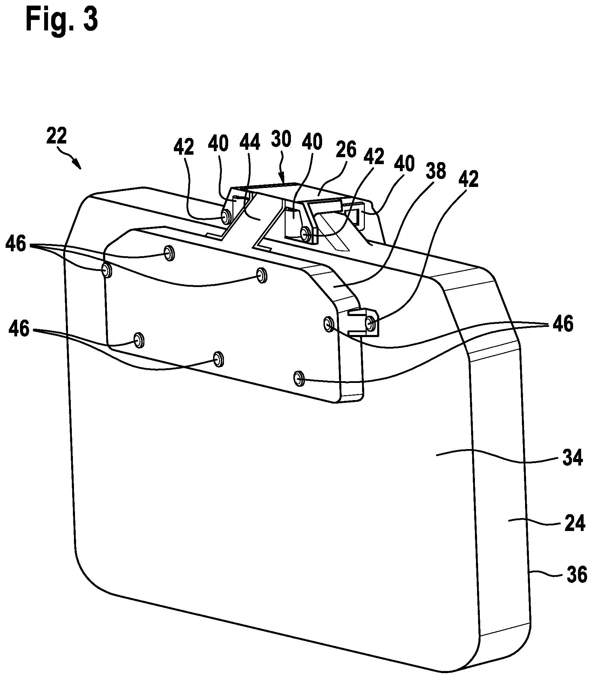

Fig. 3 zeigt ein Anzeigesystem 22 mit einer Anordnung 24 sowie einer Vorrichtung 30 gemäß Fig. 3. Das Anzeigesystem 22 ist hier zumindest teilweise von der Hinterseite gezeigt, wobei für einen Betrachter, beispielsweise ein Fahrer eines Fahrzeugs, die Hinterseite des Anzeigesystems 22 nicht sichtbar ist. Die Anordnung 24 weist eine erste Seite 34 sowie eine, der ersten Seite 34 gegenüberliegende, zweite Seite 36 auf, wobei die erste Seite 34 der Anordnung 24 für einen Betrachter nicht sichtbar ist.

Die Vorrichtung 30 weist ein Kamera-Modul 26 sowie ein Steuerungsmodul 38 auf und ist zumindest teilweise auf der Anordnung 24 angeordnet. Das Steuerungsmodul 38 und das Kamera-Modul 26 sind ferner mechanisch miteinander verbunden. Mit anderen Worten ist die Anordnung 24 zumindest teilweise zwischen dem Steuerungsmodul 38 und dem Kamera-Modul 26 angeordnet bzw. eingeklemmt. In dieser Ausgestaltungsform ist das Steuerungsmodul 38 auf der ersten Seite 34 der Anordnung 24 sowie das Kamera-Modul 26 auf der zweiten Seite 36 der Anordnung 24 angeordnet. Vorzugsweise steht das Steuerungsmodul 38 in Kontakt mit der ersten Seite 34 der Anordnung 24 sowie das Kamera-Modul 26 in Kontakt mit der zweiten Seite 36 der Anordnung 24. Die Vorrichtung 30, insbesondere das Steuerungsmodul 38, ist aus Sicht der Hinteransicht am oberen Rand der Anordnung 24 mittig angeordnet. Das Steuerungsmodul 38 verdeckt zumindest teilweise die erste Seite 34 der Anordnung 24.

Weiterhin ist das Steuerungsmodul 38 auf der ersten Seite 34 der Anordnung 24 mittels mindestens eines mechanischen Befestigungsmittels 42, insbesondere einer Schraube, an der Anordnung 24 angeordnet. In dieser Ausführungsform werden vier Schrauben 42 verwendet, wobei zwei Schrauben 42 im Bereich des oberen Randes der Anordnung 24 sowie zwei weitere Schrauben 42 in Richtung der Mitte der Anordnung 24 angebracht bzw. mit der Anordnung 24 verschraubt werden. Anstelle oder zusätzlich zu einer Schraube 42 kann auch eine Niete und/oder eine Klebeverbindung als mechanisches Befestigungsmittel 42 verwendet werden.

An der Vorrichtung 30 sind zwei Spannelemente 40 angeordnet, wobei mittels der Spannelemente 40 die Anordnung 24 zwischen dem Steuerungsmodul 38 und dem Kamera-Modul 26 eingeklemmt ist. Hierfür sind die Spannelemente 40 vorzugsweise an dem Kamera-Modul 26 und/oder an dem Steuerungsmodul 38 einrastbar.

In einer vorteilhaften Ausgestaltung sind das Steuerungsmodul 38 sowie das Kamera-Modul 26 elektrisch miteinander verbunden. Die elektrische Verbindung des Steuerungsmoduls 38 mit dem Kamera-Modul 26 ist vorzugsweise eine flexible Folie, eine flexible Leiterplatte, eine starre Leiterplatte und/oder eine Stecker-Verbindung. Die elektrische Verbindung ist in dieser Weiterentwicklung mittels einer Abschirmung 44 abgeschirmt, insbesondere zur elektromagnetischen Abschirmung. Die Abschirmung 44 ist vorzugsweise ein Deckel 44 des Steuerungsmoduls 38 und ist mittels mechanischer Befestigungselemente 46 auf dem Steuerungsmodul 38 angeordnet, insbesondere mittels Schrauben 46. Hierdurch kann das Steuerungsmodul 38 und das elektrische Verbindung vor externen Einflüssen wie beispielsweise Schmutz und/oder Strahlung geschützt werden. Anstelle oder zusätzlich zu einer Schraube 46 kann auch eine Niete und/oder eine Klebeverbindung als mechanisches Befestigungsmittel 46 verwendet werden.

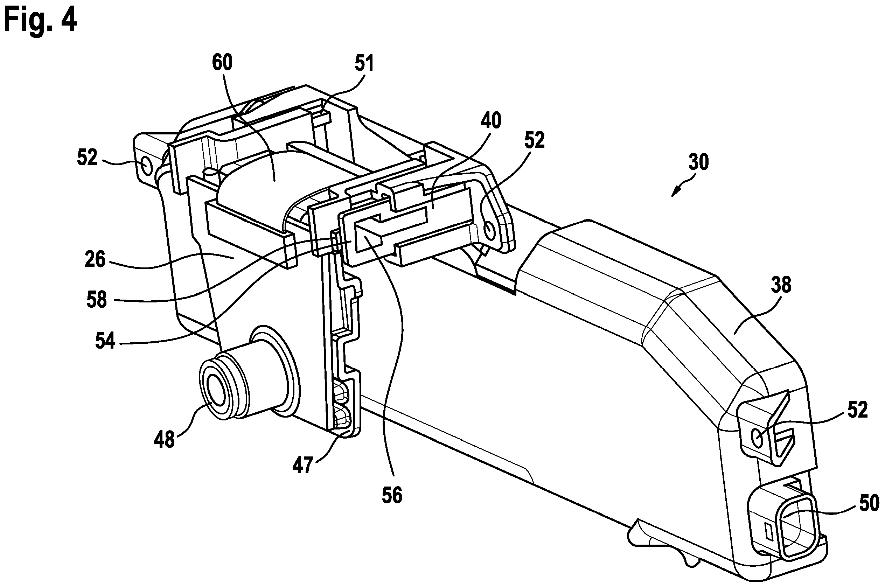

Fig. 4 zeigt eine Vorrichtung 30, wobei die Vorrichtung 30 ein Kamera-Modul 26 sowie ein Steuerungsmodul 38 aufweist. Das Kamera-Modul 26 weist insbesondere ein Gehäuse 47 sowie eine Kameraeinheit 48 auf. An dem Steuerungsmodul 38 ist vorzugsweise eine Verbindung 50, beispielsweise ein Stecker, angeordnet, zur Datenübertragung von Daten von dem Steuerungsmodul 38 an ein Fahrzeug. In dieser Ausgestaltungsform sind das Gehäuse 47 des Kamera-Moduls 26 sowie das Steuerungsmodul 38 so angeordnet, dass diese zum einen mechanisch miteinander verbunden sind und sich zum anderen in gleiche Richtungen erstrecken, sodass eine Anordnung 24 zumindest teilweise zwischen dem Kamera-Modul 26 und dem Steuerungsmodul 38 anordenbar bzw. einklemmbar ist. Das Kamera-Modul 26 sowie das Steuerungsmodul 38 sind so angeordnet, dass das Steuerungsmodul 38 an einer ersten Seite 34 einer Anordnung 24 sowie das Kamera-Modul 26 an einer zweiten Seite 36 einer Anordnung 24 anordenbar ist.

Das Steuerungsmodul 38 weist ferner Öffnungen 52 auf, beispielsweise vier Öffnungen 52. Mittels dieser Öffnungen 52 sowie mittels mechanischer Befestigungsmittel kann das Steuerungsmodul 38 an einer Anordnung 24 angeordnet bzw. mechanisch mit einer Anordnung 24 verbunden werden. Hierfür kann das Befestigungsmittel, beispielsweise eine Schraube, durch die Öffnung 52 in dem Steuerungsmodul 38 hindurchgeführt werden sowie an einer Anordnung 24 befestigt, beispielsweise verschraubt bzw. ein Gewinde in einer Anordnung 24 geschraubt, werden. Hierdurch kann das Steuerungsmodul 38 an einer Anordnung 24 befestigt werden. Anstelle der Öffnung 52 in dem Steuerungsmodul 38 könnten die Öffnung 52 auch im Gehäuse 47 des Kamera-Moduls 26 eingebracht sein, um das Kamera-Modul 26 mechanisch mit einer Anordnung 24 zu verbinden.

Auf dem Steuerungsmodul 38 ist vorzugsweise eine Schiene 51 angeordnet. Auf dieser Schiene 51 kann das Gehäuse 47 des Kamera-Moduls 26, beispielsweise zur Montage der Vorrichtung 30 auf einer Anordnung 24, entsprechend verschoben werden.

Zum Einklemmen einer Anordnung 24 zwischen dem Steuerungsmodul 38 und dem Kamera-Modul 26 ist an der Vorrichtung 30 mindestens ein Spannelement 40 angebracht. Das Spannelement 40 weist ein erstes Ende 53 sowie ein, dem ersten Ende 53 gegenüberliegendes, zweites Ende 54 auf. Das erste Ende 53 des Spannelements 40 ist an dem Steuerungsmodul 38 und das zweite Ende 54 des Spannelements 40 ist an dem Kamera-Modul 26 anordenbar. In einer Weiterentwicklung ist das zweite Ende 54 des Spannelements 40 an dem Kamera-Modul 26 einrastbar. Hierfür weist das zweite Ende 54 des Spannelements 40 eine Öffnung 56 sowie die Vorrichtung 30, hier das Kamera-Modul 26, eine Erhebung 58 auf. Die Öffnung 56 des Spannelements 40 ist auf der Erhebung 58 des Kamera-Moduls 26 einrastbar, vorzugsweise entsprechend einer Schnappverbindung.

In dieser vorteilhaften Ausgestaltung sind das Steuerungsmodul 38 und das Kamera-Modul 26 elektrisch miteinander verbunden. Die elektrische Verbindung 60 des Steuerungsmoduls 38 mit dem Kamera-Modul 26 ist insbesondere eine flexible Folie 60. Anstelle einer flexiblen Folie 60 können auch eine flexible Leiterplatte, eine starre Leiterplatte und/oder eine Stecker-Verbindung verwendet werden. Mittels der elektrischen Verbindung 60 können Daten, beispielsweise Bilddaten, zwischen dem Kamera-Modul 26 und dem Steuerungsmodul 38 versendet werden. Insbesondere können mittels der elektrischen Verbindung 60 Bilddaten, welche von dem Kamera-Modul 26 aufgenommen wurden an das Steuerungsmodul 38 zur weiteren Verarbeitung übertragen werden.

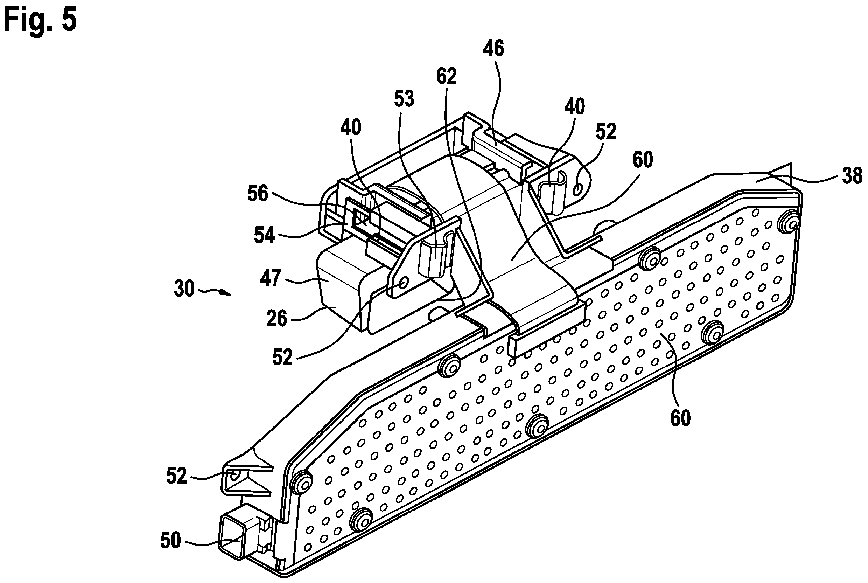

Fig. 5 zeigt eine Vorrichtung 30 gemäß Fig. 4, wobei die Vorrichtung 30 ein Kamera-Modul 26 sowie ein Steuerungsmodul 38 aufweist.

Zum Einklemmen der Anordnung 24 zwischen dem Steuerungsmodul 38 und dem Kamera-Modul 26 ist an der Vorrichtung 30 mindestens ein Spannelement 40 angebracht. Das Spannelement 40 weist ein erstes Ende 53 sowie ein, dem ersten Ende 53 gegenüberliegendes, zweites Ende 54 auf. Das erste Ende 53 des Spannelements 40 ist an dem Steuerungsmodul 38 und das zweite Ende 54 des Spannelements 40 ist an dem Kamera-Modul 26 anordenbar. In einer Weiterentwicklung ist das zweite Ende 54 des Spannelements 40 an dem Kamera-Modul 26 einrastbar. Hierfür weist das zweite Ende 54 des Spannelements 40 eine Öffnung 56 sowie die Vorrichtung 30, hier das Kamera-Modul 26, eine Erhebung 58 auf. Die Öffnung 56 des zweiten Endes 54 des Spannelements 40 ist auf der Erhebung 58 des Kamera-Moduls 26 einrastbar.

Das erste Ende 53 des Spannelements 40 ist so ausgestaltet, dass, beim Einrasten der Öffnung 56 des Spannelements 40 an dem zweiten Ende 54 des Spannelements 40 auf der Erhebung 58 des Kamera-Moduls 26, eine Kraft auf die Vorrichtung 30, insbesondere auf das Steuerungsmodul 38 und auf das Kamera-Modul 26 so wirkt, dass eine Anordnung 24 zwischen dem Kamera-Modul 26 und dem Steuerungsmodul 38 einklemmbar ist. Hierfür ist Spannelement 40 vorzugsweise entsprechend einer Feder, zum Beispiel einer Klemmfeder, ausgestaltet. Das erste Ende 53 des Spannelements 40 ist insbesondere entsprechend eines Halbkreises ausgestaltet, wobei sich das freie Ende des halbkreisförmigen ersten Endes 53 des Spannelements 40 an dem Steuerungsmodul 38 abstützt. Wird das Spannelement 40 in Richtung des zweiten Endes 54 des Spannelements 40 bzw. in Richtung Kamera-Modul 26 gezogen, so wirkt eine Kraft auf das Steuerungsmodul 38 in dem Bereich, in dem das erste Ende 53 des Spannelements 40 das Steuerungsmodul 38 kontaktiert. In einer Weiterentwicklung ist das erste Ende 53 des Spannelements 40 entsprechend eines Fragezeichens ausgestaltet, wobei der bogenförmige Teil des Fragezeichens am Spannelement 40 hin zur zweiten Ende 54 des Spannelements 40 angeordnet ist sowie der geradlinige Teil des Fragezeichens des ersten Endes 53 des Spannelements 40 das Steuerungsmodul 38 kontaktiert.

In einer vorteilhaften Ausführungsform weist das Kamera-Modul 26 eine, durch die Anordnung 24 kontaktierbare Fläche auf. An der, durch die Anordnung 24 kontaktierbaren Fläche des Kamera-Moduls 26 ist ein Schutzelement 62 aus einem elastischen Material angeordnet. Das Schutzelement 62 besteht insbesondere aus einem Schaumstoff zum Schutz der Anordnung 24, beispielsweise durch externe Einflüsse wie Stöße und/oder Vibrationen. In einer Weiterentwicklung kann ferner das Steuerungsmodul 38 eine, durch die Anordnung 24 kontaktierbare Fläche aufweisen. An der, durch die Anordnung 24 kontaktierbaren Fläche des Steuerungsmoduls 38 kann ein Schutzelement 62 aus einem elastischen Material angeordnet werden.

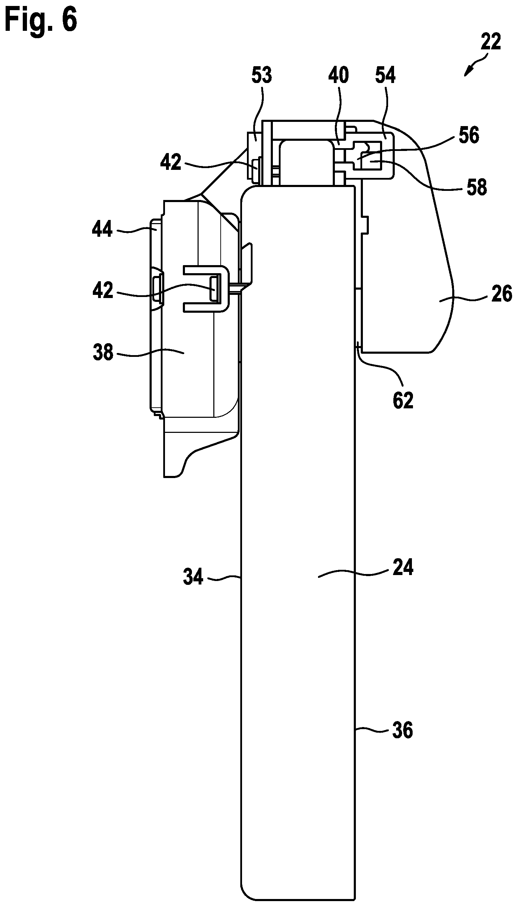

Fig. 6 zeigt ein Anzeigesystem 22 gemäß Fig. 1 und 2 mit einer Anordnung 24 sowie einer Vorrichtung 30 gemäß Fig. 4 und 5. Das Anzeigesystem 22 ist von der Seitenansicht gezeigt. Die Anordnung 24 weist eine erste Seite 34 sowie eine, der ersten Seite gegenüberliegende, zweite Seite 36 auf, wobei die zweite Seite 36 für einen Betrachter sichtbar ist.

Die Vorrichtung 30 weist ein Kamera-Modul 26 sowie ein Steuerungsmodul 38 auf und ist zumindest teilweise auf der Anordnung 24 angeordnet. Das Steuerungsmodul 38 und das Kamera-Modul 26 sind ferner mechanisch miteinander verbunden. Die Anordnung 24 ist zumindest teilweise zwischen dem Steuerungsmodul 38 und dem Kamera-Modul 26 angeordnet bzw. eingeklemmt. In dieser Ausgestaltungsform ist das Steuerungsmodul 38 auf der ersten Seite 34 der Anordnung 24 sowie das Kamera-Modul 26 auf der zweiten Seite 36 der Anordnung 24 angeordnet. Vorzugsweise steht das Steuerungsmodul 38 in Kontakt mit der ersten Seite 34 der Anordnung 24 sowie das Kamera-Modul 26 in Kontakt mit der zweiten Seite 36 der Anordnung 24. In dieser Weiterentwicklung ist auf dem Kamera-Modul 26 ein Deckel angeordnet zum Schutz der Kameraeinheit 48.

Weiterhin ist das Steuerungsmodul 38 auf der ersten Seite 34 der Anordnung 24 mittels mindestens eines mechanischen Befestigungsmittels 42, insbesondere einer Schraube, angeordnet. Hierfür weist das Steuerungsmodul 38 mehrere Öffnungen 52 auf. Zur Befestigung des Steuerungsmoduls 38 an der Anordnung 24 sind Befestigungsmittel, insbesondere Schrauben, durch die Öffnungen 52 in dem Steuerungsmodul 38 hindurchgeführt sowie an der Anordnung 24 befestigt, beispielsweise verschraubt bzw. ein Gewinde in der Anordnung 24 geschraubt. Hierdurch ist das Steuerungsmodul 38 an der Anordnung 24 befestigt. Anstelle der Öffnungen 52 in dem Steuerungsmodul 38 könnten die Öffnungen 52 auch in dem Kamera-Modul 26 eingebracht sein, um das Kamera-Modul 26 mit der Anordnung 24 mechanisch zu verbinden. Anstelle oder zusätzlich zu einer Schraube 42 kann auch eine Niete und/oder eine Klebeverbindung als mechanisches Befestigungsmittel 42 verwendet werden.

An der Vorrichtung 30 sind zwei Spannelemente 40 angeordnet, wobei mittels der Spannelemente 40 die Anordnung 24 zwischen dem Steuerungsmodul 38 und dem Kamera-Modul 26 eingeklemmt ist. Das jeweilige Spannelement 40 ist vorzugsweise an dem Kamera-Modul 26 eingerastet und stützt sich am Steuerungsmodul 38 ab. Das Spannelement 40 weist ein erstes Ende 53 sowie ein, dem ersten Ende 53 gegenüberliegendes, zweites Ende 54 auf. Das erste Ende 53 des Spannelements 40 ist an dem Steuerungsmodul 38 und das zweite Ende 54 des Spannelements 40 ist an dem Kamera-Modul 26 angeordnet bzw. eingerastet. Hierfür weist das zweite Ende 54 des Spannelements 40 eine Öffnung 56 sowie das Kamera-Modul 26 eine Erhebung 58 auf. Die Öffnung 56 des zweiten Endes 54 des Spannelements 40 ist auf der Erhebung 58 des Kamera-Moduls 26 eingerastet, beispielsweise entsprechend einer Schnappverbindung. Das erste Ende 53 des Spannelements 40 ist so ausgestaltet, dass, beim Einrasten der Öffnung 56 an dem zweiten Ende 54 des Spannelements 40 auf der Erhebung 58 des Kamera-Moduls 26, eine Kraft auf die Vorrichtung 30, insbesondere auf das Steuerungsmodul 38 und auf das Kamera-Modul 26 so wirkt, dass die Anordnung 24 zwischen dem Kamera-Modul 26 und dem Steuerungsmodul 38 ein eingeklemmt ist. Hierfür ist das erste Ende 53 des Spannelements 40 vorzugsweise entsprechend einer Feder, zum Beispiel einer Klemmfeder, ausgestaltet. Wird das Spannelement 40 in Richtung des zweiten Endes 54 des Spannelements 40 gezogen, so wirkt eine Kraft auf das Steuerungsmodul 38 an der Stelle, an der das erste Ende 53 des Spannelements 40 das Steuerungsmodul 38 kontaktiert.

In Weiterentwicklung weist das Kamera-Modul 26 eine, durch die Anordnung 24 kontaktierbare Fläche auf. An der, durch die Anordnung 24 kontaktierten Fläche des Kamera-Moduls 26, ist ein Schutzelement 62 aus einem elastischen Material angeordnet. Das Schutzelement 62 besteht insbesondere aus einem Schaumstoff zum Schutz der Anordnung 24, beispielsweise durch externe Einflüsse wie Stöße und/oder Vibrationen.

In einer weiteren Ausgestaltungsform kann das Spannelement 40 ein elastisches Gummiband sein, wobei ein erstes Ende 53 des Spannelements 40 an dem Steuerungsmodul 38 sowie ein zweites Ende 54 des Spannelements 40 an dem Kamera-Modul 26 anordenbar bzw. einhakbar ist. Mittels des Spannelements 40, hier ein elastisches Gummiband, wirkt eine Kraft auf die Vorrichtung 30, insbesondere auf das Kamera-Modul 26 und das Steuerungsmodul 38, sodass eine Anordnung 24 zwischen dem Kamera-Modul 26 und dem Steuerungsmodul 38 einklemmbar ist.

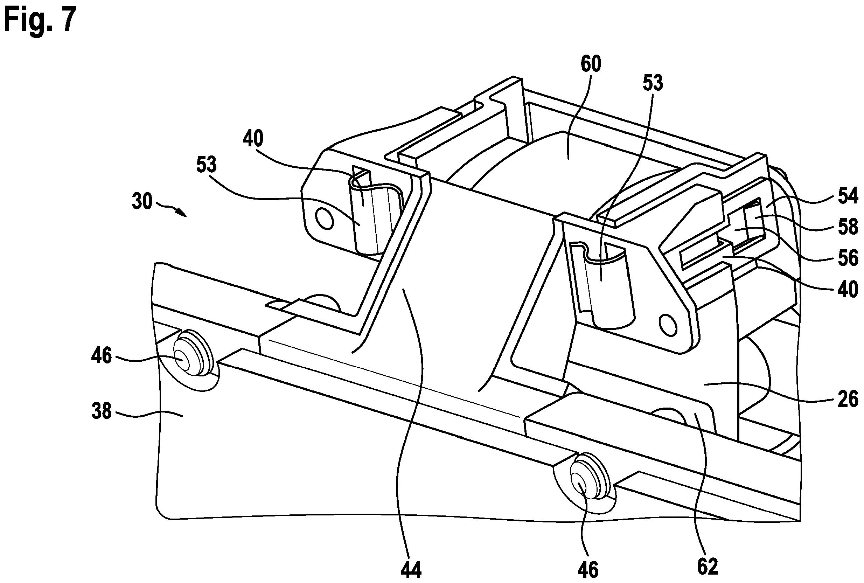

Fig. 7 zeigt eine Detailansicht der Vorrichtung 30, aufweisend das Kamera-Modul 26 und das Steuerungsmodul 38, wobei das Kamera-Modul 26 und das Steuerungsmodul 38 sind mechanisch miteinander verbunden. In dieser Ausführungsform sind an dem Steuerungsmodul 38 zwei Spannelemente 40 angeordnet, sodass eine Anordnung 24, beispielsweise eine Anzeigeeinheit, zwischen dem Kamera-Modul 26 und dem Steuerungsmodul 38 einklemmbar ist. Ein Spannelement 40 weist ein erstes Ende 53 sowie ein, dem ersten Ende 53 gegenüberliegendes, zweites Ende 54 auf. Das erste Ende 53 des Spannelements 40 ist an dem Steuerungsmodul 38 angeordnet und das zweite Ende 54 des Spannelements 40 ist an dem Kamera-Modul 26 angeordnet bzw. eingerastet.

Das zweite Ende 54 des Spannelements 40 weist eine Öffnung 56 auf, wobei die Öffnung 56 des zweiten Endes 54 Spannelements 40 am Kamera-Modul 26 eingerastet ist. Hierfür weist das Kamera-Modul 26 eine Erhebung 58 auf, wobei die Öffnung 56 des zweiten Endes 54 des Spannelements 40 auf der Erhebung 58 des Kamera-Modul 26 eingerastet ist. Das erste Ende 53 des Spannelements 40 ist federnd ausgelegt, sodass mittels des Spannelements 40 eine Kraft auf die Vorrichtung 30, insbesondere auf das Steuerungsmodul 38 und das Kamera-Modul 26 so wirkt, dass eine Anordnung 24 zwischen dem Kamera-Modul 26 und dem Steuerungsmodul 38 einklemmbar ist. Mit anderen Worten wenn die Öffnung 56 des zweiten Endes 54 des Spannelements 40 auf der Erhebung 58 des Kamera-Moduls 26 eingerastet ist, wirkt eine Kraft auf das Steuerungsmodul 38 mittels des ersten Endes 53 des Spannelements 40, sodass eine Anordnung 24 zwischen dem Kamera-Modul 26 und dem Steuerungsmodul 38 einklemmbar ist. Wird eine Anordnung 24 zumindest teilweise zwischen dem Steuerungsmodul 38 von dem Kamera-Modul 26 angeordnet, so ist diese mittels der vorhandenen Kraft aufgrund des Spannelements 40 zwischen dem Steuerungsmodul 38 und dem Kamera-Modul 26 einklemmbar. Hierfür ist das erste Ende 53 des Spannelements 40 bogenförmig und/oder halbkreisförmig geformt. Das freie Ende des halbkreisförmigen, ersten Endes 53 des Spannelements 40 steht in Kontakt mit dem Steuerungsmodul 38 bzw. stützt sich an dem Steuerungsmodul 38 ab.

Ferner sind das Steuerungsmodul 38 und das Kamera-Modul 26 elektrisch miteinander verbunden. Die elektrische Verbindung 60 des Steuerungsmoduls 38 mit dem Kamera-Modul 26 ist insbesondere eine flexible Folie 60. Anstelle einer flexiblen Folie 60 können auch eine flexible Leiterplatte, eine starre Leiterplatte und/oder eine Stecker-Verbindung verwendet werden. Mittels der elektrischen Verbindung 60 können Daten, beispielsweise Bilddaten, zwischen dem Kamera-Modul 26 und dem Steuerungsmodul 38 versendet werden. Insbesondere können mittels der elektrischen Verbindung 60 Bilddaten, welche von dem Kamera-Modul 26 aufgenommen wurden an das Steuerungsmodul 38 zur Verarbeitung übertragen werden. Die elektrische Verbindung 60 ist in dieser Weiterentwicklung mittels einer Abschirmung 44 abgeschirmt, insbesondere zur elektromagnetischen Abschirmung. Die Abschirmung 44 ist vorzugsweise ein Deckel 44 des Steuerungsmoduls 38 und ist mittels mechanischer Befestigungselemente 46 auf dem Steuerungsmodul 38 angeordnet, insbesondere mittels Schrauben 46. Hierdurch kann das Steuerungsmodul 38 ebenfalls vor externen Einflüssen wie beispielsweise Strahlung und/oder Schmutz geschützt werden. Anstelle oder zusätzlich zu einer Schraube 46 kann auch eine Niete und/oder eine Klebeverbindung als mechanisches Befestigungsmittel 46 verwendet werden.

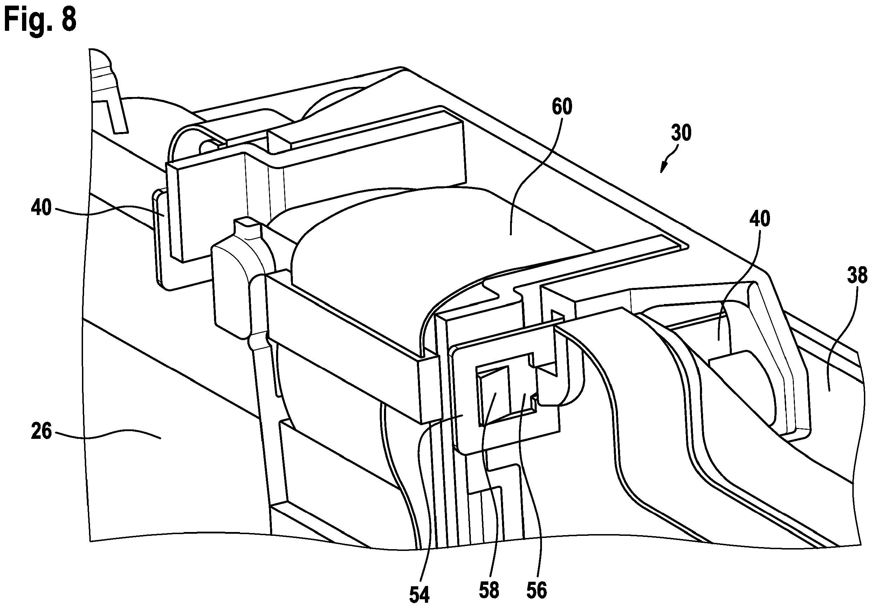

Fig. 8 zeigt eine Vorrichtung 30, aufweisend ein Kamera-Modul 26 sowie ein Steuerungsmodul 38. An der Vorrichtung 30 ist mindestens ein Spannelement 40 angebracht. In dieser Ausführungsform sind zwei Spannelemente 40 an der Vorrichtung 30 angebracht. Das Spannelement 40 weist ein erstes Ende 53 sowie ein, dem ersten Ende 53 gegenüberliegendes, zweites Ende 54 auf. Das erste Ende 53 des Spannelements 40 ist an dem Steuerungsmodul 38 und das zweite Ende 54 des Spannelements 40 ist an dem Kamera-Modul 26 anordenbar. In einer Weiterentwicklung ist das zweite Ende 54 des Spannelements 40 an dem Kamera-Modul 26 einrastbar. Hierfür weist das zweite Ende 54 des Spannelements 40 eine Öffnung 56 sowie die Vorrichtung 30, hier das Kamera-Modul 26, eine Erhebung 58 auf. Die Öffnung 56 des Spannelements 40 ist auf der Erhebung 58 des Kamera-Moduls 26 einrastbar.

In dieser vorteilhaften Ausgestaltung sind das Steuerungsmodul 38 und das Kamera-Modul 26 gemäß Fig. 7 elektrisch miteinander verbunden.

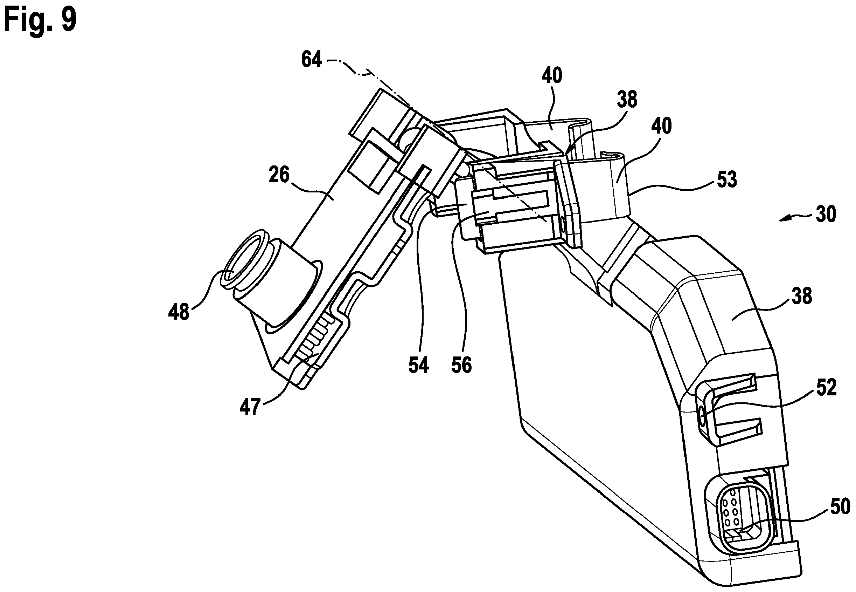

Fig. 9 zeigt eine Vorrichtung 30 gemäß Fig. 4, wobei die Vorrichtung 30 ein Kamera-Modul 26 sowie ein Steuerungsmodul 38 aufweist. Zusätzlich weist die Vorrichtung 30 gemäß Fig. 9 eine Drehachse 64 auf. Die Drehachse 64 ist so an der Vorrichtung 30 angeordnet, dass das Steuerungsmodul 38 und das Kamera-Modul 26 gegeneinander verdrehbar sind. Mittels der Drehachse 64 kann das Kamera-Modul 26 bzw. das Steuerungsmodul 38 so in eine vorgegebene Richtung bewegt werden, dass das Kamera-Modul 26 bzw. das Steuerungsmodul 38 um die an der Vorrichtung 30 angeordneten Drehachse 64 gedreht werden kann. Mit anderen Worten kann das Kamera-Modul 26 bzw. das Steuerungsmodul 38 hin zur Anordnung 24 zugeklappt werden. Hierdurch kann der Winkel zwischen einer Fläche des Steuerungsmodul 38 und einer Fläche des Kamera-Moduls 26 verringert werden, bis das Kamera-Modul 26 und das Steuerungsmodul 38 die Anordnung 24 kontaktieren.

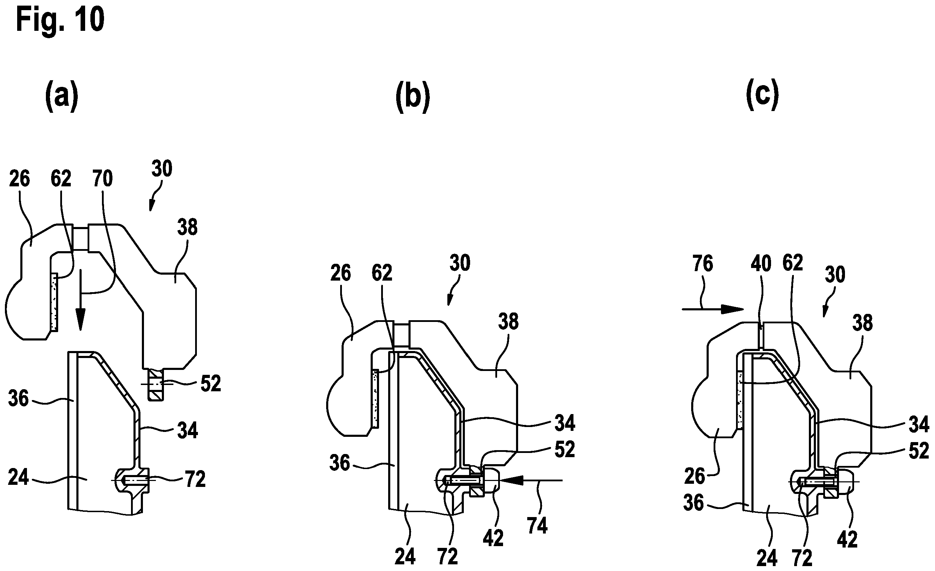

Fig. 10 zeigt drei, Teilfiguren Fig. 10 (a), Fig. 10 (b) und Fig. 10 (c) mittels welcher der Montagevorgang zur Anordnung 24 einer Vorrichtung 30 zumindest teilweise auf einer Anordnung 24, insbesondere auf einer Anzeigeeinheit, gezeigt wird. Die Anordnung 24 und die Vorrichtung 30, aufweisend ein Steuerungsmodul 38 und ein Kamera-Modul 26, sind entsprechend der vorherigen Fig. 1 bis 8 ausgestaltet. Das Steuerungsmodul 38 und das Kamera-Modul 26 sind mechanisch miteinander verbunden.

In einem ersten Schritt wird die Anordnung 24 zumindest teilweise zwischen dem Kamera-Modul 26 und dem Steuerungsmodul 38 angeordnet. Dies wird in Fig. 10 (a) dargestellt. Die Richtung in der die Vorrichtung 30 auf der Anordnung 24 angeordnet wird bzw. in der die Vorrichtung 30 auf die Anordnung 24 geschoben wird, wird mittels des Pfeils 70 dargestellt.

In einem zweiten Schritt wird die Vorrichtung 30, insbesondere das Kamera-Modul 26 oder das Steuerungsmodul 38, mittels eines Befestigungsmittels 42 mit der Anordnung 24 verbunden. Hierfür weist die Anordnung 24 eine Öffnung 72 auf, welche beispielsweise ein Gewinde aufweist. Ferner weist das Steuerungsmodul 38 eine Öffnung 52 auf. Die Öffnung 72 der Anordnung 24 und die Öffnung 52 des Steuerungsmoduls 38 werden so übereinandergelegt, dass in dem zweiten Schritt der Montage, welcher in Fig. 10 (b) gezeigt wird, ein mechanisches Befestigungsmittel 42, zum Beispiel eine Schraube, sowohl durch die Öffnung 72 der Anordnung 24 als auch durch die Öffnung 52 des Steuerungsmoduls 38 geführt werden kann. Die Schraube 42 wird entlang der Richtung, welche mittels des Pfeils 74 dargestellt wird, sowohl durch die Öffnung 72 der Anordnung 24 als auch durch die Öffnung 52 des Steuerungsmoduls 38 geführt. Anschließend wird die Schraube 42, vorzugsweise im Gewinde der Öffnung 72 der Anordnung 24, in der Anordnung 24 verschraubt. Hierdurch wird das Steuerungsmodul 38 mittels eines mechanischen Befestigungsmittels 42 an der Anordnung 24 angeordnet bzw. befestigt.

In einem dritten Schritt werden das Kamera-Modul 26 und das Steuerungsmodul 38 in Kontakt mit der Anordnung 24 gebracht. Hierfür wird das Kamera-Modul 26 in Richtung der Anordnung 24 bzw. in Richtung des Steuerungsmoduls 38 geschoben. Die Richtung entlang welcher das Kamera-Modul 26 geschoben wird, wird mittels eines Pfeils 76 dargestellt wird. In dieser beispielhaften Ausführungsform wird das Kamera-Modul 26 so in eine vorgegebene Richtung bewegt, dass das Kamera-Modul 26 in Kontakt mit der zweiten Seite 36 der Anordnung 24 steht. Hierfür ist auf dem Steuerungsmodul 38 insbesondere eine Schiene 51 angeordnet. Auf dieser Schiene 51 kann das Gehäuse 47 des Kamera-Moduls 26 entsprechend verschoben werden.

Vorzugsweise ist der Pfeil 76, welcher die Richtung anzeigt, in welche das Kamera-Modul 26 geschoben wird, parallel zu dem Pfeil 74, welche die Richtung anzeigt, in welche die Schraube 42 sowohl durch die Öffnung 72 der Anordnung 24 als auch durch die Öffnung 52 des Steuerungsmoduls 38 geführt wird.

Alternativ kann in dem dritten Schritt das Kamera-Modul 26 und das Steuerungsmodul 38 in Kontakt mit der Anordnung 24 gebracht werden, indem das Kamera-Modul 26 so in eine vorgegebene Richtung bewegt wird, dass das Kamera-Modul 26 um eine an der Vorrichtung 30 gemäß Fig. 9 angeordneten Drehachse 64 gedreht wird. Mit anderen Worten wird das Kamera-Modul 26 hin zur Anordnung 24 zugeklappt. Hierdurch wird der Winkel zwischen einer Fläche des Steuerungsmoduls 38 und einer Fläche des Kamera-Moduls 26 verringert, bis das Kamera-Modul 26 und das Steuerungsmodul 38 die Anordnung 24 kontaktieren.

In einem vierten Schritt wird ein Spannelement 40 entsprechend den Fig. 1 bis 9 so an der Vorrichtung 30 angeordnet, dass die Anordnung 24 zwischen dem Steuerungsmodul 38 und dem Kamera-Modul 26 eingeklemmt wird.

## Patentansprüche

1. Vorrichtung (30), aufweisend ein Steuerungsmodul (38) und ein Kamera-Modul (26), wobei die Vorrichtung (30) auf einer Anordnung (24), insbesondere einer Anzeigeeinheit, montierbar ist,
wobei,
das Steuerungsmodul (38) und das Kamera-Modul (26) mechanisch miteinander verbunden sind,
dass die Vorrichtung (30) mindestens ein Befestigungsmittel (42) zur Befestigung der Vorrichtung (30) an der Anordnung (24) aufweist,
dass an der Vorrichtung (30) mindestens ein Spannelement (40) angeordnet ist und dass das Spannelement (40) an der Vorrichtung (30) so angeordnet ist, dass die Anordnung (24) zwischen dem Kamera-Modul (26) und dem Steuerungsmodul (38) einklemmbar ist
dass das mindestens eine Spannelement (40) ein erstes Ende (53) sowie ein, dem ersten Ende (53) gegenüberliegendes, zweites Ende aufweist und dass das erste Ende (53) des Spannelements (40) an dem Steuerungsmodul (38) anordenbar ist und das zweite Ende (54) des Spannelements (40) an dem Kamera-Modul (26) anordenbar ist und **dadurch gekennzeichnet,**
**dass** die Vorrichtung (30) eine Erhebung (58) aufweist und dass das erste und/oder das zweite Ende (54) des Spannelements (40) eine Öffnung (56) aufweist und dass die Öffnung (56) des ersten und/oder des zweiten Endes des Spannelements (40) auf der Erhebung (58) der Vorrichtung (30) an der Vorrichtung (30) einrastbar ist.

2. Vorrichtung (30) nach Anspruch 1, **dadurch gekennzeichnet, dass** das erste Ende (53) des Spannelements (40) an dem Steuerungsmodul (38) einrastbar ist und/oder das zweite Ende (54) des Spannelements (40) an dem Kamera-Modul (26) einrastbar ist.

3. Vorrichtung (30) nach einem der vorherigen Ansprüche, **dadurch gekennzeichnet, dass** mittels des Spannelements (40) eine Kraft auf die Vorrichtung (30), insbesondere auf das Steuerungsmodul (38) und auf das Kamera-Modul (26), so wirkt, dass die Anordnung (24) zwischen dem Kamera-Modul (26) und dem Steuerungsmodul (38) einklemmbar ist.

4. Vorrichtung (30) nach einem der vorherigen Ansprüche, **dadurch gekennzeichnet, dass** das mindestens eine Befestigungsmittel (42) ein mechanisches Befestigungsmittel (42) ist, zur mechanischen Befestigung der Vorrichtung (30) an der Anordnung (24), insbesondere eine Schraube, eine Niete und/oder eine Klebeverbindung.

5. Vorrichtung (30) nach einem der vorherigen Ansprüche, **dadurch gekennzeichnet, dass** das Steuerungsmodul (38) und/oder das Kamera-Modul (26) eine, durch die Anordnung (24) kontaktierbare Fläche aufweist und dass an der, durch die Anordnung (24) kontaktierbaren Fläche des Steuerungsmoduls (38) und/oder des Kamera-Moduls (26) ein Schutzelement (62) aus einem elastischen Material angeordnet ist, insbesondere Schaumstoff, zum Schutz der Anordnung (24).

6. Vorrichtung (30) nach einem der vorherigen Ansprüche, **dadurch gekennzeichnet, dass** das Steuerungsmodul (38) und das Kamera-Modul (26) elektrisch miteinander verbunden sind.

7. Vorrichtung (30) nach Anspruch 6, **dadurch gekennzeichnet, dass** die elektrische Verbindung (60) des Steuerungsmoduls (38) mit dem Kamera-Modul (26) eine flexible Folie, eine flexible Leiterplatte, eine starre Leiterplatte und/oder eine Stecker-Verbindung ist.

8. Vorrichtung (30) nach einem der Ansprüche 6 bis 7, **dadurch gekennzeichnet, dass** die elektrische Verbindung (60) des Steuerungsmoduls (38) mit dem Kamera-Modul (26) mittels einer Abschirmung (44) abgeschirmt ist, insbesondere zur elektromagnetischen Abschirmung.

9. Vorrichtung (30) nach einem der vorherigen Ansprüche, **dadurch gekennzeichnet, dass** die Vorrichtung (30) eine Drehachse (64) aufweist und dass die Drehachse (64) so an der Vorrichtung (30) angeordnet ist, dass das Steuerungsmodul (38) und das Kamera-Modul (26) gegeneinander verdrehbar sind.

10. Anordnung (24) mit einer Vorrichtung (30) nach einem der vorherigen Ansprüche, **dadurch gekennzeichnet, dass** die Anordnung (24) eine erste Seite (34) aufweist sowie eine, der ersten Seite (34) gegenüberliegende, zweite Seite (36) aufweist und dass das Steuerungsmodul (38) auf der ersten Seite (34) der Anordnung (24) anordenbar ist sowie das Kamera-Modul (26) auf der zweiten Seite (36) der Anordnung (24) anordenbar ist.

11. Anordnung (24) nach Anspruch 10, **dadurch gekennzeichnet, dass** das Steuerungsmodul (38) in Kontakt mit der ersten Seite (34) der Anordnung (24) steht sowie das Kamera-Modul (26) in Kontakt mit der zweiten Seite (36) der Anordnung (24) steht.

12. Verfahren zum Montieren einer Vorrichtung (30), aufweisend ein Steuerungsmodul (38) und ein Kamera-Modul (26), auf einer Anordnung(24), insbesondere auf einer Anzeigeeinheit,
**dadurch gekennzeichnet,**
**dass** das Steuerungsmodul (38) und das Kamera-Modul (26) mechanisch miteinander verbunden sind,
**dass** in einem ersten Schritt die Anordnung (24) zumindest teilweise zwischen dem Kamera-Modul (26) und dem Steuerungsmodul (38) angeordnet wird,
**dass** in einem zweiten Schritt die Vorrichtung (30), insbesondere das Kamera-Modul (26) oder das Steuerungsmodul (38), mittels eines Befestigungsmittels (42) mit der Anordnung (24) verbunden wird,
**dass** in einem dritten Schritt das Kamera-Modul (26) und das Steuerungsmodul (38) in Kontakt mit der Anordnung (24) gebracht werden und
**dass** in einem vierten Schritt ein Spannelement (40) an der Vorrichtung (30) so angeordnet wird, dass die Anordnung (24) zwischen dem Steuerungsmodul (38) und dem Kamera-Modul (26) eingeklemmt wird,
**dass** das mindestens eine Spannelement (40) ein erstes Ende (53) sowie ein, dem ersten Ende (53) gegenüberliegendes, zweites Ende aufweist und dass das erste Ende (53) des Spannelements (40) an dem Steuerungsmodul (38) angeordnet wird und das zweite Ende (54) des Spannelements (40) an dem Kamera-Modul (26) angeordnet wird und
**dass** die Vorrichtung (30) eine Erhebung (58) aufweist und dass das erste und/oder das zweite Ende (54) des Spannelements (40) eine Öffnung (56) aufweist und dass die Öffnung (56) des ersten und/oder des zweiten Endes des Spannelements (40) auf der Erhebung (58) der Vorrichtung (30) an der Vorrichtung (30) einrastet.

## Claims

1. Apparatus (30) having a control module (38) and a camera module (26), wherein the apparatus (30) can be mounted on an arrangement (24), in particular a display unit,
wherein
the control module (38) and the camera module (26) are mechanically connected to one another,
that the apparatus (30) has at least one fastening means (42) for fastening the apparatus (30) to the arrangement (24),
that at least one clamping element (40) is arranged on the apparatus (30), and that the clamping element (40) is arranged on the apparatus (30) such that the arrangement (24) can be clamped in between the camera module (26) and the control module (38),
that the at least one clamping element (40) has a first end (53) and a second end which is situated opposite the first end (53), and that the first end (53) of the clamping element (40) can be arranged on the control module (38) and the second end (54) of the clamping element (40) can be arranged on the camera module (26), and
**characterized in that**
the apparatus (30) has a raised portion (58), and **in that** the first and/or the second end (54) of the clamping element (40) have/has an opening (56), and **in that** the opening (56) of the first and/or of the second end of the clamping element (40) can be latched in on the apparatus (30) on the raised portion (58) of the apparatus (30).

2. Apparatus (30) according to Claim 1, **characterized in that** the first end (53) of the clamping element (40) can be latched in on the control module (38) and/or the second end (54) of the clamping element (40) can be latched in on the camera module (26).

3. Apparatus (30) according to one of the preceding claims, **characterized in that** a force acts on the apparatus (30), in particular on the control module (38) and on the camera module (26), by means of the clamping element (40) such that the arrangement (24) can be clamped in between the camera module (26) and the control module (38).

4. Apparatus (30) according to one of the preceding claims, **characterized in that** the at least one fastening means (42) is a mechanical fastening means (42) for mechanically fastening the apparatus (30) to the arrangement (24), in particular a screw, a rivet and/or an adhesive connection.

5. Apparatus (30) according to one of the preceding claims, **characterized in that** the control module (38) and/or the camera module (26) have/has an area which can be contacted by the arrangement (24), and **in that** a protective element (62) composed of an elastic material, in particular foam, for protecting the arrangement (24) is arranged on the area of the control module (38) and/or of the camera module (26) that can be contacted by the arrangement (24).

6. Apparatus (30) according to one of the preceding claims, **characterized in that** the control module (38) and the camera module (26) are electrically connected to one another.

7. Apparatus (30) according to Claim 6, **characterized in that** the electrical connection (60) of the control module (38) to the camera module (26) is a flexible film or foil, a flexible printed circuit, a rigid printed circuit and/or a plug connection.

8. Apparatus (30) according to either of Claims 6 and 7, **characterized in that** the electrical connection (60) of the control module (38) to the camera module (26) is shielded by means of a shielding (44), in particular for electromagnetic shielding.

9. Apparatus (30) according to one of the preceding claims, **characterized in that** the apparatus (30) has a rotation axis (64), and **in that** the rotation axis (64) is arranged on the apparatus (30) such that the control module (38) and the camera module (26) can be rotated in relation to one another.

10. Arrangement (24) comprising an apparatus (30) according to one of the preceding claims, **characterized in that** the arrangement (24) has a first side (34) and a second side (36) which is situated opposite the first side (34), and **in that** the control module (38) can be arranged on the first side (34) of the arrangement (24) and the camera module (26) can be arranged on the second side (36) of the arrangement (24).

11. Arrangement (24) according to Claim 10, **characterized in that** the control module (38) is in contact with the first side (34) of the arrangement (24) and the camera module (26) is in contact with the second side (36) of the arrangement (24).

12. Method for mounting an apparatus (30), having a control module (38) and a camera module (26), on an arrangement (24), in particular on a display unit, **characterized**
**in that** the control module (38) and the camera module (26) are mechanically connected to one another,
**in that** in a first step the arrangement (24) is arranged at least partially between the camera module (26) and the control module (38),
**in that** in a second step the apparatus (30), in particular the camera module (26) or the control module (38), is connected to the arrangement (24) by means of a fastening means (42),
**in that** in a third step the camera module (26) and the control module (38) are brought into contact with the arrangement (24), and
**in that** in a fourth step a clamping element (40) is arranged on the apparatus (30) such that the arrangement (24) is clamped in between the control module (38) and the camera module (26),
**in that** the at least one clamping element (40) has a first end (53) and a second end which is situated opposite the first end (53), and in that the first end (53) of the clamping element (40) is arranged on the control module (38) and the second end (54) of the clamping element (40) is arranged on the camera module (26), and
**in that** the apparatus (30) has a raised portion (58), and in that the first and/or the second end (54) of the clamping element (40) have/has an opening (56), and in that the opening (56) of the first and/or of the second end of the clamping element (40) latches in on the apparatus (30) on the raised portion (58) of the apparatus (30).

## Revendications

1. Dispositif (30), comprenant un module de commande (38) et un module de caméra (26), le dispositif (30) pouvant être monté sur un arrangement (24), notamment une unité d'affichage,
le module de commande (38) et le module de caméra (26) étant reliés mécaniquement l'un à l'autre,
que le dispositif (30) possède au moins un moyen de fixation (42) destiné à fixer le dispositif (30) à l'arrangement (24),
qu'au moins un élément de serrage (40) est disposé au niveau du dispositif (30) et que l'élément de serrage (40) est disposé au niveau du dispositif (30) de telle sorte que l'arrangement (24) peut être serré entre le module de caméra (26) et le module de commande (38), que l'au moins un élément de serrage (40) possède une première extrémité (53) ainsi qu'une deuxième extrémité à l'opposé de la première extrémité (53) et que la première extrémité (53) de l'élément de serrage (40) pouvant être disposée sur le module de commande (38) et la deuxième extrémité (54) de l'élément de serrage (40) pouvant être disposée sur le module de caméra (26) et **caractérisé en ce que**
le dispositif (30) possède un bossage (58) et **en ce que** la première et/ou la deuxième extrémité (54) de l'élément de serrage (40) possède une ouverture (56) et **en ce que** l'ouverture (56) de la première et/ou de la deuxième extrémité de l'élément de serrage (40) peut être encliquetée sur le bossage (58) du dispositif (30) au niveau du dispositif (30).

2. Dispositif (30) selon la revendication 1, **caractérisé en ce que** la première extrémité (53) de l'élément de serrage (40) peut être encliquetée sur le module de commande (38) et/ou la deuxième extrémité (54) de l'élément de serrage (40) peut être encliquetée sur le module de caméra (26).

3. Dispositif (30) selon l'une des revendications précédentes, **caractérisé en ce qu'**une force agit sur le dispositif (30) au moyen de l'élément de serrage (40), en particulier sur le module de commande (38) et sur le module de caméra (26), de telle sorte que l'arrangement (24) peut être serré entre le module de caméra (26) et le module de commande (38).

4. Dispositif (30) selon l'une des revendications précédentes, **caractérisé en ce que** l'au moins un moyen de fixation (42) est un moyen de fixation (42) mécanique destiné à la fixation mécanique du dispositif (30) à l'arrangement (24), notamment une vis, un rivet et/ou un assemblage collé.

5. Dispositif (30) selon l'une des revendications précédentes, **caractérisé en ce que** le module de commande (38) et/ou le module de caméra (26) possède une surface qui peut être mise en contact avec l'arrangement (24) et **en ce qu'**un élément de protection (62) en un matériau élastique, notamment de la mousse, est disposé au niveau de la surface du module de commande (38) et/ou du module de caméra (26) qui peut être mise en contact avec l'arrangement (24) en vue de protéger l'arrangement (24).

6. Dispositif (30) selon l'une des revendications précédentes, **caractérisé en ce que** le module de commande (38) et le module de caméra (26) sont reliés électriquement l'un à l'autre.

7. Dispositif (30) selon la revendication 6, **caractérisé en ce que** la liaison électrique (60) du module de commande (38) avec le module de caméra (26) est un film souple, un circuit imprimé souple, un circuit imprimé rigide et/ou une connexion à fiche.

8. Dispositif (30) selon l'une des revendications 6 et 7, **caractérisé en ce que** la liaison électrique (60) du module de commande (38) avec le module de caméra (26) est blindée au moyen d'un blindage (44), servant notamment au blindage électromagnétique.

9. Dispositif (30) selon l'une des revendications précédentes, **caractérisé en ce que** le dispositif (30) possède un axe de rotation (64) et **en ce que** l'axe de rotation (64) est disposé au niveau du dispositif (30) de telle sorte que le module de commande (38) et le module de caméra (26) peuvent effectuer une rotation l'un par rapport à l'autre.

10. Arrangement (24) comprenant un dispositif (30) selon l'une des revendications précédentes, **caractérisé en ce que** l'arrangement (24) possède un premier côté (34) ainsi qu'un deuxième côté (36) à l'opposé du premier côté (34) et **en ce que** le module de commande (38) peut être disposé sur le premier côté (34) de l'arrangement (24) et le module de caméra (26) sur le deuxième côté (36) de l'arrangement (24).

11. Arrangement (24) selon la revendication 10, **caractérisé en ce que** le module de commande (38) se trouve en contact avec le premier côté (34) de l'arrangement (24) et le module de caméra (26) se trouve en contact avec le deuxième côté (36) de l'arrangement (24).

12. Procédé de montage d'un dispositif (30), comprenant un module de commande (38) et un module de caméra (26), sur un arrangement (24), notamment sur une unité d'affichage,
**caractérisé**
**en ce que** le module de commande (38) et le module de caméra (26) sont reliés mécaniquement l'un à l'autre, en ce que dans une première étape, l'arrangement (24) est disposé au moins partiellement entre le module de caméra (26) et le module de commande (38),
**en ce que** dans une deuxième étape, le dispositif (30), notamment le module de caméra (26) ou le module de commande (38), est relié à l'arrangement (24) par le biais d'un moyen de fixation (42),
**en ce que** dans une troisième étape, le module de caméra (26) et le module de commande (38) sont amenés en contact avec l'arrangement (24) et
**en ce que** dans une quatrième étape, un élément de serrage (40) est disposé au niveau du dispositif (30) de telle sorte que l'arrangement (24) est serré entre le module de commande (38) et le module de caméra (26),
**en ce que** l'au moins un élément de serrage (40) possède une première extrémité (53) ainsi qu'une deuxième extrémité à l'opposé de la première extrémité (53) et en ce que la première extrémité (53) de l'élément de serrage (40) est disposée sur le module de commande (38) et la deuxième extrémité (54) de l'élément de serrage (40) est disposée sur le module de caméra (26) et
**en ce que** le dispositif (30) possède un bossage (58) et en ce que la première et/ou la deuxième extrémité (54) de l'élément de serrage (40) possède une ouverture (56) et en ce que l'ouverture (56) de la première et/ou de la deuxième extrémité de l'élément de serrage (40) s'encliquète sur le bossage (58) du dispositif (30) au niveau du dispositif (30).
